# EUROPÄISCHE PATENTSCHRIFT

(11) **EP 4 090 916 B1**
(45) Veröffentlichungstag und Bekanntmachung des Hinweises auf die Patenterteilung: **17.07.2024**
(21) Anmeldenummer: 20823791.7
(22) Anmeldetag: 10.12.2020
(51) Int. Cl.: G01F 15/18, G01F 23/284, G01D 11/30

(54) **BEFESTIGUNGS-VORRICHTUNG FÜR FÜLLSTANDSMESSGERÄTE**
FASTENING DEVICE FOR FILL LEVEL GAUGES
DISPOSITIF DE FIXATION DESTINÉ À DES JAUGES DE NIVEAU

(30) Priorität: 15.01.2020 DE 102020100867
(43) Veröffentlichungstag der Anmeldung: 23.11.2022
(73) Patentinhaber: Endress+Hauser SE+Co. KG, 79689 Maulburg (DE)
(72) Erfinder: SCHWALD, Rolf, 79650 Schopfheim (DE); SAUTERMEISTER, Manuel, 79650 Schopfheim (DE); KAISER, Andreas, 4334 Sisseln (CH); HOFFMANN, Ronny, 8400 Winterthur (CH)
(74) Vertreter: Koslowski, Christine Adelheid
(86) Internationale Anmeldenummer: PCT/EP2020/085545
(87) Internationale Veröffentlichungsnummer: WO 2021/144082

(56) Entgegenhaltungen:
- CN-A- 101 379 372
- DE-U1- 202004 016 973
- US-A1- 2003 066 942
- US-A1- 2018 292 519
- US-B1- 6 407 713
- US-B2- 8 602 277
- "Operating Instructions VEGAPULS WL 61 4 … 20 mA/HART -two-wire", 12 November 2011 (2011-11-12), pages 1 - 52, XP055140732, Retrieved from the Internet <URL:http://www.vega.com/downloads/BA/38061-en.pdf> [retrieved on 20140917]

## Beschreibung

Die Erfindung betrifft eine Befestigungs-Vorrichtung für Füllstandsmessgeräte an IBC-Tanks.

In der Automatisierungstechnik, insbesondere zur Prozessautomatisierung werden vielfach Feldgeräte eingesetzt, die zur Erfassung diverser Messgrößen dienen. Bei der zu bestimmenden Messgröße kann es sich beispielsweise um einen Füllstand, einen Durchfluss, einen Druck, die Temperatur, den pH-Wert, das Redoxpotential, eine Leitfähigkeit oder den Dielektrizitätswert eines Mediums in einer Prozessanlage handeln. Zur Erfassung der entsprechenden Messwerte umfassen die Feldgeräte jeweils geeignete Sensoren bzw. basieren auf geeigneten Messprinzipien. Eine Vielzahl verschiedener Feldgeräte-Typen wird von der Firmen-Gruppe Endress + Hauser hergestellt und vertrieben.

Zur Füllstandsmessung von Füllgütern in Behältern haben sich Radar-basierte Messverfahren etabliert, da sie robust und wartungsarm sind. Ein zentraler Vorteil Radar-basierter Messverfahren besteht in der Fähigkeit, den Füllstand quasi kontinuierlich messen zu können. Im Kontext dieser Patentanmeldung bezieht sich der Begriff "*Radar"* auf Radar-Signale mit Frequenzen zwischen 0.03 GHz und 300 GHz. Übliche Frequenzbänder, bei denen Füllstandsmessung durchgeführt wird, liegen bei 2 GHz, 26 GHz, 79 GHz, oder 120 GHz. Die beiden gängigen Messprinzipien bilden hierbei das Puls-Laufzeit-Prinzip (auch unter dem Begriff "*Pulsradar"* bekannt) sowie das FMCW-Prinzip *("Frequency Modulated Continuous Wave").* Ein Füllstandsmessgerät, welches nach dem Puls-Laufzeit-Verfahren arbeitet, ist beispielsweise in der Offenlegungsschrift DE 10 2012 104 858 A1 beschrieben. Bezüglich eines typischen Aufbaus von FMCW-basierten Füllstandsmessgeräten sei exemplarisch auf die Offenlegungsschrift DE 10 2013 108 490 A1 verwiesen.

Näher beschrieben werden die Messprinzipien von FMCW und Pulsradar außerdem in *"*Radar Level Detection, Peter Devine, 2000*".*

Das Dokument CN 101 379 372 A offenbart ein Radar-Füllstandmessgerät, das durch eine Klemm-Halterung an einem Behälter montierbar ist. Füllstandsmessgeräte werden vorwiegend an Behältern eingesetzt, die hierzu über eine entsprechende Behälteröffnung, wie einen Flanschanschluss an der Oberseite des Behälters, verfügen. Daneben können Radar-basierte Füllstandsmessgeräte prinzipiell jedoch auch an Behältern ohne eine hierfür vorgesehene Behälteröffnung eingesetzt werden, sofern die Behälterwand für die entsprechenden Radar-Frequenzen zu einem überwiegenden Anteil transparent ist. Bei vielen Kunststoff-basierten Behältertypen, wie IBC-Tanks (*"Intermediate Bulk Container*") ist dies der Fall. Allerdings entfällt in diesen Fällen die Möglichkeit, das Füllstandsmessgerät an der Öffnung bzw. dem Behälter zu fixieren. Das nachträgliche Anbringen von Befestigungsmitteln für das Füllstandsmessgerät birgt wiederum die Gefahr, die Dichtigkeit des Behälters bspw. durch Bohrlöcher herabzusetzen. Zwar ist es außerdem denkbar, das Füllstandsmessgerät an die Außenfläche des Behälters zu kleben, jedoch ist diese Art der Befestigung nicht ohne Weiteres lösbar.

Der Erfindung liegt daher die Aufgabe zugrunde, eine Befestigungs-Vorrichtung zur lösbaren Fixierung eines Radar-basierten Füllstandsmessgerätes an einem Behälter bereitzustellen, der über keine hierfür vorgesehene Behälter-Öffnung verfügt.

Die Erfindung löst diese Aufgabe durch eine Befestigungs-Vorrichtung zum Fixieren eines Radar-basierten Füllstandsmessgerätes an einem Außengitter eines Behälters, insbesondere eines kunststoffbasierten IBC-Tanks, umfassend:
- Eine Klemm-Halterung, die an einen insbesondere senkrechten Gitterstab des Außengitters klemmbar ist,
- einen Adapter, mit
   ∘ einem ersten Befestigungsmittel, mittels dem das Füllstandsmessgerät lösbar am Adapter montierbar ist, und
   ∘ einer Aussparung, durch welche im montierten Zustand Radar-Signale des Füllstandsmessgerätes gen Füllgut sendbar und von dort empfangbar sind, und
- ein zweites Befestigungsmittel, mittels dem das Füllstandsmessgerät über den Adapter an der Klemm-Halterung befestigbar ist.

Dabei kann die Klemm-Halterung beispielsweise mit folgenden Komponenten realisiert werden:
- Einem Grundkörper mit einer Einbuchtung,
- einer Konterplatte, und
- einer Schraubverbindung, mittels der ein Gitterstab des Außengitters zwischen der Konterplatte und der Einbuchtung einklemmbar ist.

Erfindungsgemäß wird somit das Außengitter des Behälters genutzt, um das Füllstandsmessgerät zu befestigen. Hierdurch muss der eigentliche Behälter mit dem Füllstandsmessgerät bzw. mit der Befestigungs-Vorrichtung nicht in Kontakt gebracht werden. Somit entfallen entsprechende bauliche Eingriffe am Behälter, die im Zweifelsfall die Dichtigkeit des Behälters beeinträchtigen könnten. Die Materialien, aus dem die Klemm-Halterung und der Adapter jeweils gefertigt werden, sind im Rahmen der Erfindung nicht fest vorgeschrieben. Essentiell ist lediglich, dass eine ausreichende Steifigkeit gewährleistet ist, um das Füllstandsmessgerät tragen zu können. Dementsprechend können die Klemm-Halterung und/oder der Adapter beispielsweise aus einem Metall oder einem mechanisch stabilen Kunststoff wie PP oder PEEK gefertigt sein.

Das zweite Befestigungsmittel kann vorzugsweise so ausgelegt werden, dass das Füllstandsmessgerät in Bezug zum Außengitter um eine definierte Achse schwenkbar ist. Hierdurch ist auch bei einem schräg verlaufenden Gitterstab eine senkrechte Ausrichtung des Füllstandsmessgerätes gewährleistet. Vorteilhaft ist es außerdem, wenn die Einbuchtung in der Klemm-Halterung für den einzuklemmenden Gitterstab einen dreieckigen Querschnitt aufweist. Dies bietet den Vorteil, dass die Klemm-Halterung an verschieden dicke Gitterstäben fixiert werden kann. Damit das Füllstandsmessgerät ohne Werkzeug an der Befestigungs-Vorrichtung montiert werden kann, ist es wiederum vorteilhaft, wenn das erste Befestigungsmittel derart ausgelegt ist, dass das Füllstandsmessgerät in den Adapter einrastbar ist.

Die Befestigungs-Vorrichtung kann außerdem in der Form erweitert werden, dass die Klemm-Halterung eine Unterlegplatte umfasst, die mittels der Schraubverbindung zwischen der Konterplatte und der Einbuchtung einklemmbar ist. Dies dient dazu, die Einbuchtung abzudecken, so dass die Klemm-Halterung auch an etwaigen Außengittern anbringbar ist, deren Gitter mit Dicken von weit weniger als 0,5 cm sehr feinmaschig sind.

Analog zur erfindungsgemäßen Befestigungs-Vorrichtung wird die Aufgabe, die der Erfindung zugrunde liegt, außerdem durch ein entsprechendes Mess-System zur Messung eines Füllstandes eines in einem Behälter befindlichen Füllgutes gelöst, bei dem der Behälter ein Außengitter aufweist. Dabei umfasst das Mess-System folgende Komponenten:
- Ein Radar-basiertes Füllstandsmessgerät, und
- eine Befestigungs-Vorrichtung nach einem der vorhergehend beschriebenen Ausführungsvarianten, mittels dem das Füllstandsmessgerät an das Außengitter des Behälters fixierbar ist.

Ein entsprechendes Verfahren zur Montage dieses Mess-Systems an einem Behälter, der ein Außengitter aufweist, kann daher folgendermaßen durchgeführt werden:
- Anklemmen der Klemm-Halterung an einem Gitterstab des Außengitters,
- Befestigen des Füllstandsmessgerätes am Adapter, und
- Befestigung des Adapters mitsamt dem Füllstandsmessgerät an der Klemm-Halterung.

Anhand der nachfolgenden Figuren wird die Erfindung näher erläutert. Es zeigt:
Fig. 1: Eine erfindungsgemäße Befestigung eines Radar-basierten Füllstandsmessgerätes an einem Behälter,
Fig. 2: eine Detail-Ansicht der erfindungsgemäßen Befestigungs-Vorrichtung, und
Fig. 3: eine mögliche Realisierungsform der Klemm-Halterung.

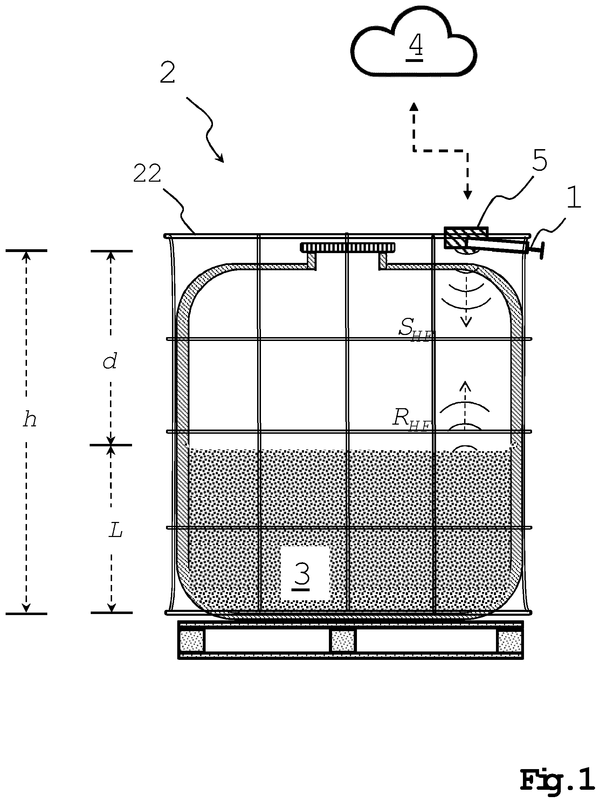

Zum grundsätzlichen Verständnis der Erfindung ist in Fig. 1 ein frei abstrahlendes, Radar-basiertes Füllstandsmessgerät 5 an einem Behälter 2 gezeigt. Dabei befindet sich in dem Behälter 2 ein Füllgut 3, dessen Füllstand L durch das Füllstandsmessgerät 5 zu bestimmen ist.

In der Regel ist das Füllstandsmessgerät 5 über ein Bussystem, wie etwa "Ethernet", "PROFIBUS", "HART" oder "Wireless HART" mit einer übergeordneten Einheit 4, beispielsweise einem Prozessleitsystem oder einer dezentralen Datenbank verbunden. Hierüber können zum einen Informationen über den Betriebszustand des Füllstandsmessgerätes 5 kommuniziert werden. Über das Bussystem können jedoch auch Informationen über den Füllstand L übermittelt werden, um gegebenenfalls am Behälter 2 vorhandene Zu- oder Abflüsse zu steuern.

Zur Bestimmung des Füllstandes L ist das Füllstandsmessgerät 5 oberhalb des Behälters 2 angebracht. Unabhängig vom implementierten Messprinzip ist das Füllstandsmessgerät 5 so ausgerichtet, dass gemäß dem FMCW-Prinzip oder dem Pulslaufzeit-Prinzip ein entsprechendes Radar-Signal S_{HF} in Richtung des Füllgutes 3 ausgesendet wird. An der Oberfläche des Füllgutes 3 wird das Radar-Signal S_{HF} reflektiert und nach einer korrespondierenden Signallaufzeit vom Füllstandsmessgerät 5 entsprechend als Empfangssignal R_{HF} empfangen. Hierbei hängt die Signallaufzeit des Radar-Signals S_{HF}, R_{HF} vom Abstand d = h - L des Füllstandsmessgerätes 5 zur Füllgut-Oberfläche ab.

Da es sich bei dem in Fig. 1 illustrierten Behälter 2 um einen IBC-Tank handelt, der an der oberen Behälterwand keine separate Öffnung für das Füllstandsmessgerät 5 umfasst, gibt es keine Möglichkeit zur unmittelbaren Befestigung des Füllstandsmessgerätes 5 am Behälter 2. Erfindungsgemäß ist das Füllstandsmessgerät 5 daher mittels einer Befestigungs-Vorrichtung 1 an einem Außengitter 22 des IBC-Tanks 2 fixiert.

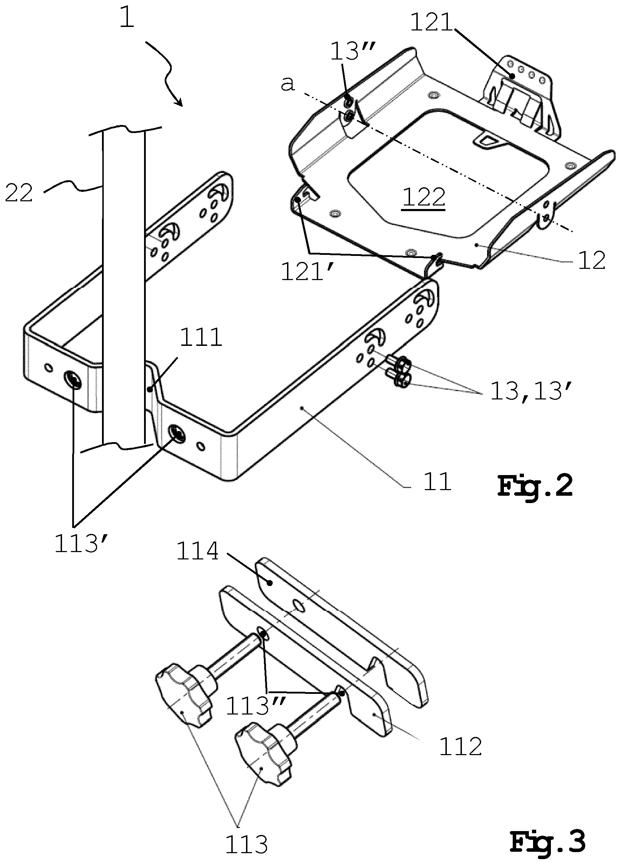

Eine Detailansicht der erfindungsgemäßen Befestigungs-Vorrichtung 1 ist in Fig. 2 näher dargestellt: Wie erkennbar ist, basiert die Befestigungs-Vorrichtung 1 auf einer Klemm-Halterung 11, die an einen der Gitterstäbe des Außengitters 22 klemmbar ist. Hierzu basiert die Klemm-Halterung 11 auf einem lattenförmigen Grundkörper aus einem Edelstahl, der zu einem offenen Rechteck gebogen ist und die entsprechende Steifigkeit zur Lastaufnahme des Füllstandsmessgerätes 5 aufweist. Mittig in derjenigen Seitenfläche des Rechteckes, die der offenen Seitenfläche gegenüberliegt, ist der lattenförmige Grundköper in Form einer Einbuchtung 111 eingebogen, wobei die Einbuchtung 111 im gezeigten Ausführungsbeispiel einen dreieckigen Querschnitt aufweist. Dabei dient die dreiecksförmige Einbuchtung 111 als Aussparung für denjenigen Bereich des Gitterstabes, an dem das Füllstandsmessgerät 5 zu fixieren ist. Der dreiecksförmige Querschnitt ermöglicht hierbei, dass die Klemm-Halterung 11 bezüglich des Gitterstab-Durchmessers zumindest innerhalb eines gewissen Wertebereichs flexibel ist.

Das Einklemmen des Gitterstabes in der Einbuchtung 111 erfolgt durch eine Konterplatte 112 (siehe Fig. 3), welche im Bereich der Einbuchtung 111 mittels einer Schraubverbindung 113, 113`, 113" gegen den lattenförmigen Grundkörper der Klemm-Halterung 11 gepresst wird. Hierzu umfasst der Grundkörper rechts und links neben der Einbuchtung 111 jeweils ein Gewinde 113`, deren Abstand zueinander zu den entsprechenden Durchführungen 113" in der Konterplatte 112 korrespondiert. Durch Anziehen der zwei entsprechenden Schrauben 113 kann der Gitterstab in der Einbuchtung 111 von der Konterplatte 113 entsprechend eingeklemmt werden, so dass die Klemm-Halterung 11 am Außengitter 22 des Behälters 2 fixiert ist.

Bei der in Fig. 3 gezeigten Ausführungsform des Schraubverbindung 113, 113`, 113" ist als erweiterte Ausführungsoption zudem eine Unterlegplatte 114 dargestellt, die zwischen der Konterplatte 112 und der Einbuchtung 111 vorgesehen ist. Korrespondierend zu den Durchführungen 113" in der Konterplatte 112 umfasst auch die Unterlegplatte 114 entsprechende Durchführungen, so dass die Unterlegplatte 114 mittels der Schraubverbindung 113 zwischen der Konterplatte 112 und der Einbuchtung 111 eingeklemmt werden kann. Eingesetzt werden kann diese Erweiterung, wenn die Klemm-Halterung 11, und somit das Füllstandsmessgerät 5 nicht an Gitterstäben mit Durchmessern im cm-Bereich anzubringen ist, sondern auch an etwaigen Außengittern 22 des Behälters 2, deren Gitter mit Dicken von weniger als 0,5 cm sehr feinmaschig sind.

An der Klemm-Halterung 11 wird das Füllstandsmessgerät 5 nicht unmittelbar montiert, sondern über einen Adapter 12. Dementsprechend umfasst der Adapter 12 zur lösbaren Montage des Füllstandsmessgerätes 5 ein erstes Befestigungsmittel 121, 121'. Essentiell ist bei der Auslegung des Adapters 12, dass die Radar-Signale S_{HF}, R_{HF} durch den Adapter 12 im montierten Zustand nicht abgeblendet werden. Die in Fig. 2 gezeigte Ausführungsvariante des Adapters 12 umfasst daher in einer Grundplatte eine entsprechende Aussparung 122. Hierdurch können die Radar-Signale S_{HF}, R_{HF} im montierten Zustand des Füllstandsmessgerätes 5 abblendungsfrei gen Füllgut 2 ausgesendet bzw. von dort wieder empfangen werden. Auch die Grundplatte bzw. der Adapter 12 kann aus einem rostfreien Edelstahl gefertigt werden.

Das erste Befestigungsmittel 121, 121` kann, wie in Fig. 2 dargestellt ist, beispielsweise so ausgelegt werden, dass das Füllstandsmessgerät 5 in den Adapter 12 einrastbar ist, bzw. umgekehrt. Dadurch kann das Füllstandsmessgerät 5 ohne Werkzeug an der Befestigungs-Vorrichtung montiert werden. Hierzu sind bei dem in Fig. 2 gezeigten Ausführungsbeispiel an demjenigen Endbereich der Adapter-Grundplatte, die im montierten Zustand der Klemm-Halterung 11 zugewandt ist, zwei Einrasthaken 121' für entsprechende Ösen am Füllstandsmessgerät 5 angebracht. Am gegenüberliegenden Endbereich der Adapter-Grundplatte, welcher der Klemm-Halterung 11 im montierten Zustand abgewandt ist, ist eine Einrastkralle 121 zum Einrasten in eine entsprechende Leiste am Füllstandsmessgerät 5 angebracht. Zum Lösen des Füllstandsmessgerätes 5 vom Adapter 12 ist die Einrastkralle 121 entsprechend weit nach außen federnd ausgelegt.

Die Befestigung des Adapters 12 bzw. des Füllstandsmessgerätes 5 an der Klemm-Halterung 11 erfolgt mittels eines entsprechenden zweiten Befestigungsmittels 13, 13`, 13". Bei der in Fig. 2 gezeigten Ausführungsvariante ist das zweite Befestigungsmittel 13, 13`, 13" in Form einer Schraubverbindung realisiert. Hierzu umfassen die zwei Seitenflächen am rechteckigen, lattenförmigen Grundkörper der Klemm-Halterung 11, die der offenen Seitenfläche gegenüberliegen, jeweils zwei Durchführungen 13' für vier entsprechende Schrauben 13. Korrespondierend zu diesen Durchführungen 13' umfasst der Adapter 12 an zwei gegenüberliegenden Abwinklungen der Grundplatte entsprechende Gewinde 13".

Bei der in Fig. 2 dargestellten Ausführungsform des Befestigungsmittels 13 ist pro Seitenfläche die obere der zwei Durchbohrungen 90°-kreissegmentförmig ausgelegt. Hierdurch ist das Füllstandsmessgerät 5 in Bezug zur Klemm-Halterung 11 bzw. zum Außengitter 22 um diejenige Achse a, in der die unteren zwei Schrauben 13 an den Seitenflächen angeordnet sind, um bis zu 90° schwenkbar. Somit ist auch bei schrägem Verlauf des jeweiligen Gitterstab-Segmentes eine senkrechte Ausrichtung des Füllstandsmessgerätes 5 gewährleistet.

### Bezugszeichenliste

- 1: Befestigungs-Vorrichtung
- 2: Füllgut
- 3: IBC-Tank
- 4: Übergeordnete Einheit
- 5: Füllstandsmessgerät
- 11: Klemm-Halterung
- 12: Adapter
- 13, 13', 13": Zweites Befestigungsmittel
- 22: Außengitter des IBC-Tanks
- 111: Einbuchtung
- 112: Konterplatte
- 113, 113`, 113": Schraubverbindung
- 114: Unterlegplatte
- 121, 121': Erstes Befestigungsmittel
- a: Achse
- d: Abstand
- R_{HF}: Empfangenes Radar-Signal
- h: Einbauhöhe
- L: Füllstand
- S_{HF}: Radar-Signal

## Patentansprüche

1. Befestigungs-Vorrichtung zum Fixieren eines Radar-basierten Füllstandsmessgerätes (5) an einem Außengitter (22) eines Behälters (2), insbesondere eines IBC-Tanks, umfassend:
- Eine Klemm-Halterung (11), die an einen insbesondere senkrechten Gitterstab des Außengitters (22) klemmbar ist,
- einen Adapter (12), mit
∘ einem ersten Befestigungsmittel (121, 121`), mittels dem das Füllstandsmessgerät (5) lösbar am Adapter (12) montierbar ist, und
∘ einer Aussparung (122), durch welche im montierten Zustand Radar-Signale (S_{HF}, R_{HF}) des Füllstandsmessgerätes (5) gen Füllgut (2) sendbar und von dort empfangbar sind, und
- ein zweites Befestigungsmittel (13), mittels dem das Füllstandsmessgerät (1) über den Adapter (12) an der Klemm-Halterung (11) befestigbar ist.

2. Befestigung nach Anspruch 1, wobei das zweite Befestigungsmittel (13) derart ausgelegt ist, dass das Füllstandsmessgerät (5) in Bezug zum Außengitter (22) um eine definierte Achse (a) schwenkbar ist.

3. Befestigungs-Vorrichtung nach einem der vorhergehenden Ansprüche, wobei die Klemm-Halterung (11) folgende Komponenten umfasst:
- Einen Grundkörper mit einer Einbuchtung (111),
- eine Konterplatte (112),
- eine Schraubverbindung (113, 113`, 113"), mittels der ein Gitterstab des Außengitters (22) zwischen der Konterplatte (112) und der Einbuchtung (111) einklemmbar ist.

4. Befestigungs-Vorrichtung nach Anspruch 3, wobei die Einbuchtung (111) einen dreieckigen Querschnitt aufweist.

5. Befestigungs-Vorrichtung nach Anspruch 3 oder 4, wobei die Klemm-Halterung (11) eine Unterlegplatte (114) umfasst, die mittels der Schraubverbindung (113) zwischen der Konterplatte (112) und der Einbuchtung (111) einklemmbar ist.

6. Befestigungs-Vorrichtung nach einem der vorhergehenden Ansprüche, wobei das erste Befestigungsmittel (121, 121') derart ausgelegt ist, dass das Füllstandsmessgerät (1) in den Adapter (12) einrastbar ist.

7. Mess-System zur Messung eines Füllstandes (L) eines in einem Behälter (2) befindlichen Füllgutes (3), wobei der Behälter (2) ein Außengitter (22) aufweist, folgende Komponenten umfassend:
- Ein Radar-basiertes Füllstandsmessgerät (5), und
- eine Befestigungs-Vorrichtung (1) nach einem der vorhergehenden Ansprüche, mittels dem das Füllstandsmessgerät (5) an das Außengitter (22) des Behälters (2) fixierbar ist.

8. Verfahren zur Montage des Mess-Systems nach Anspruch 7 an einem Behälter (2), der ein Außengitter (22) aufweist, folgende Verfahrensschritte umfassend:
- Anklemmen der Klemm-Halterung (11) an einem Gitterstab des Außengitters (22),
- Befestigen des Füllstandsmessgerätes (5) am Adapter (12), und
- Befestigung des Adapters (12) mitsamt dem Füllstandsmessgerät (5) an der Klemm-Halterung (11).

## Claims

1. Fastening device for fixing a radar-based level measuring device (5) to an outer grid (22) of a container (2), in particular an IBC tank, comprising:
- A clamping holder (11), which can be clamped to an in particular vertical bar of the outer grille (22),
- an adapter (12), with
∘ a first fastening means (121, 121'), by means of which the level measuring device (5) can be detachably mounted on the adapter (12), and
∘ a recess (122) through which radar signals (S_{HF} , R_{HF} ) of the level measuring device (5) can be transmitted to the product (2) and received from there in the mounted state, and
- a second fastening means (13), by means of which the level measuring device (1) can be fastened to the clamping bracket (11) via the adapter (12).

2. Fastening according to claim 1, wherein the second fastening means (13) is designed such that the level measuring device (5) can be pivoted about a defined axis (a) in relation to the outer grid (22).

3. Fastening device according to one of the preceding claims, wherein the clamping mount (11) comprises the following components:
- A base body with an indentation (111),
- a counter plate (112),
- a screw connection (113, 113', 113"), by means of which a grid bar of the outer grid (22) can be clamped between the counter plate (112) and the indentation (111).

4. Fastening device according to claim 3, wherein the indentation (111) has a triangular cross-section.

5. Fastening device according to claim 3 or 4, wherein the clamping mount (11) comprises a shim plate (114) which can be clamped between the counter plate (112) and the indentation (111) by means of the screw connection (113).

6. Fastening device according to one of the preceding claims, wherein the first fastening means (121, 121') is designed such that the level measuring device (1) can be latched into the adapter (12).

7. Measuring system for measuring a filling level (L) of a filling material (3) located in a container (2), the container (2) having an outer grid (22), comprising the following components:
- A radar-based level measuring device (5), and
- a fastening device (1) according to one of the preceding claims, by means of which the level measuring device (5) can be fixed to the outer grid (22) of the container (2).

8. Method for mounting the measuring system according to claim 7 on a container (2) having an outer grid (22), comprising the following method steps:
- Clamp the clamping bracket (11) to a bar of the outer grille (22),
- Attach the level measuring device (5) to the adapter (12), and
- Attach the adapter (12) together with the level gauge (5) to the clamping bracket (11).

## Revendications

1. Dispositif de fixation pour fixer un appareil de mesure de niveau de remplissage (5) basé sur un radar sur une grille extérieure (22) d'un récipient (2), en particulier d'une citerne IBC, comprenant :
- un support de serrage (11) qui peut être serré sur un barreau de grille, en particulier vertical, de la grille extérieure (22),
- un adaptateur (12), avec
∘ un premier moyen de fixation (121, 121'), au moyen duquel l'appareil de mesure de niveau (5) peut être monté de manière amovible sur l'adaptateur (12), et
∘ un évidement (122) à travers lequel, à l'état monté, des signaux radar (S_{HF} , R_{HF} ) de l'appareil de mesure de niveau (5) peuvent être envoyés vers le produit (2) et reçus de là, et
- un deuxième moyen de fixation (13), au moyen duquel l'appareil de mesure de niveau (1) peut être fixé au support de serrage (11) par l'intermédiaire de l'adaptateur (12).

2. Fixation selon la revendication 1, dans laquelle le deuxième moyen de fixation (13) est conçu de telle sorte que l'appareil de mesure de niveau (5) peut pivoter autour d'un axe défini (a) par rapport à la grille extérieure (22).

3. Dispositif de fixation selon l'une des revendications précédentes, dans lequel le support de serrage (11) comprend les composants suivants :
- Un corps de base avec un renfoncement (111),
- une contre-plaque (112),
- un assemblage à vis (113, 113', 113"), au moyen duquel une barre de la grille extérieure (22) peut être serrée entre la contre-plaque (112) et l'encoche (111).

4. Dispositif de fixation selon la revendication 3, dans lequel l'indentation (111) présente une section transversale triangulaire.

5. Dispositif de fixation selon la revendication 3 ou 4, dans lequel le support de serrage (11) comprend une cale (114) qui peut être serrée entre la contre-plaque (112) et l'indentation (111) au moyen de l'assemblage par vis (113).

6. Dispositif de fixation selon l'une des revendications précédentes, dans lequel le premier moyen de fixation (121, 121') est conçu de telle sorte que l'appareil de mesure de niveau (1) puisse être encliqueté dans l'adaptateur (12).

7. Système de mesure pour mesurer un niveau de remplissage (L) d'un produit de remplissage (3) se trouvant dans un récipient (2), le récipient (2) présentant une grille extérieure (22), comprenant les composants suivants :
- un appareil de mesure de niveau à base de radar (5), et
- un dispositif de fixation (1) selon l'une des revendications précédentes, au moyen duquel l'appareil de mesure du niveau de remplissage (5) peut être fixé à la grille extérieure (22) du récipient (2).

8. Procédé de montage du système de mesure selon la revendication 7 sur un récipient (2) qui présente une grille extérieure (22), comprenant les étapes de procédé suivantes :
- Serrage du support de serrage (11) sur un barreau de la grille extérieure (22),
- fixer l'appareil de mesure du niveau de remplissage (5) sur l'adaptateur (12), et
- Fixation de l'adaptateur (12) avec l'appareil de mesure du niveau de remplissage (5) sur le support de serrage (11).
